# DEMANDE DE BREVET EUROPEEN

(11) **EP 1 289 077 A1**
(43) Date de publication de la demande: **05.03.2003**
(21) Numéro de dépôt: 02291774.4
(22) Date de dépôt: 15.07.2002
(51) Int. Cl.: H01S 3/067

(54) **Fibre optique double coeur avec anneau dopé terre rare**

(30) Priorité: 30.08.2001 FR 0111262
(71) Demandeur: ALCATEL, 75008 Paris (FR)
(72) Inventeur: Moreau, Christine, 91120 Palaiseau (FR); Leplingard, Florence, 78000 Versailles (FR); Provost, Lionel, 91460 Marcoussis (FR); Simonneau, Christian, 92160 Antony (FR); Rejeaunier, Xavier, 91310 Linas (FR); Bousselet, Philippe, 91630 Leudeville (FR); Gasca, Laurent, 91140 Villebon sur Yvette (FR); Bayart, Dominique, 92140 Clamart (FR)
(74) Mandataire: Korakis-Ménager, Sophie

(57) **Abrégé**

Fibre optique amplificatrice comprenant un coeur monomode d'indice de réfraction n₁, un coeur multimode d'indice de réfraction n₂ et une gaine optique d'indice de réfraction n₃, ledit coeur multimode comprenant un anneau dopé de terre rare entourant le coeur monomode, caractérisée en ce que l'anneau dopé de terre rare a un indice de réfraction n₄ sensiblement égal à l'indice de réfraction n₂ du coeur multimode.

## Description

La présente invention concerne le domaine des amplificateurs optiques et des sources lumineuses à fibre optique.

De tels composants à fibre sont principalement composés de deux coeurs concentriques : un coeur central monomode constitué d'un milieu amplificateur et destiné à la propagation du signal optique, et un coeur multimode, entourant le coeur monomode, utilisé pour la propagation d'un faisceau de pompage. Une gaine optique entoure le coeur multimode. L'indice de réfraction est le plus élevé dans le coeur central et le plus faible dans la gaine. Ainsi, les deux coeurs concentriques se comportent comme des guides d'ondes.

Une fibre optique amplificatrice fonctionne sur le principe dit de l'émission stimulée, selon lequel un matériau peut émettre une onde lumineuse de même longueur d'onde et de même phase que l'onde lumineuse transmise, et cela par excitation dudit matériau au moyen d'une source lumineuse de grande énergie, typiquement un laser de pompage dont la longueur d'onde est inférieure à celle du signal transmis dans la fibre. L'amplification optique au moyen d'un matériau capable de générer une émission stimulée dépend des états quantiques dudit matériau. Une amplification est produite lorsque le niveau quantique haut du matériau a une population plus forte que le niveau bas, c'est à dire lorsque l'on obtient une inversion de population qui est créée par l'absorption du signal lumineux de pompage dans ledit matériau.

Les principaux matériaux amplificateurs utilisés sont des ions de terre rare tels que de l'erbium ou de l'ytterbium par exemple, et sont généralement intégrés comme dopants dans le coeur central monomode de la fibre.

Le signal lumineux se propageant dans le coeur monomode de la fibre optique peut être émis par une source lumineuse ou provenir de la facette de sortie d'une fibre optique. Ce signal lumineux porte l'information optique que l'on souhaite amplifier dans la fibre optique amplificatrice de la présente invention. Le coeur central monomode présente les dimensions standards des fibres optiques de transmission utilisées en télécommunication, soit environ 7 µm de diamètre.

Le faisceau de pompage est classiquement émis par un laser à injection apte à émettre un faisceau d'une grande puissance. Le faisceau de pompage se propage dans le coeur multimode de la fibre optique et traverse régulièrement le coeur monomode. L'interaction entre la pompe et le milieu amplificateur d'une part, et entre le signal et le milieu amplificateur d'autre part permet une amplification du signal. Le principal avantage d'une structure à double coeur est que la lumière peut se propager dans le coeur multimode externe jusqu'à son absorption par le matériau dopant du coeur monomode central. Le faisceau signal est ainsi amplifié optiquement par les inversions de populations dues aux absorptions du faisceau de pompage par le matériau amplificateur du coeur central.

Une telle structure permet de fournir un amplificateur à fibre optique en ligne avec un gain important. Dans certaines applications, une telle structure peut également constituer un laser à fibre si au sein de cette dernière, des moyens assurant une réflexion partielle ou totale, sélective ou non en longueur d'onde sont introduits.

L'efficacité de l'amplification est directement liée à l'efficacité du pompage qui est essentiellement conditionnée par l'efficacité du couplage entre le coeur monomode et le coeur multimode.

Or, une des difficultés qui se posent avec les coeurs concentriques cylindriques est que certains rayons lumineux véhiculés par le coeur multimode suivent une trajectoire en hélice autour du coeur monomode sans jamais y pénétrer, c'est à dire sans jamais traverser le matériau amplificateur. L'énergie portée par ces rayons est donc injectée en vain dans la fibre, car elle n'est jamais utilisée pour amplifier le signal transporté dans le coeur monomode, dont le diamètre est nécessairement limité pour conserver une propagation monomode.

Ainsi, les fibres optiques à pompage comportent généralement une structure particulière qui leur permet d'accepter davantage de puissance optique de pompage et ainsi d'augmenter l'amplification du signal optique qui est obtenue par absorption d'énergie. Par exemple, pour tenter de résoudre ce problème, il a déjà été proposé, notamment dans le brevet US-A-5 966 491, de former des rainures longitudinales dans la surface externe du coeur multimode, afin de briser les trajectoires en hélice des rayons lumineux et forcer ces derniers à rencontrer l'interface du coeur monomode.

Une solution alternative à la modification de trajectoire des rayons du faisceau de pompage consiste à déplacer la zone dopée dans une zone plus fréquemment traversée par les rayons lumineux du faisceau de pompage. Ainsi, il a été proposé de situer la zone dopée, non pas dans le coeur monomode, mais dans un anneau situé dans le coeur multimode et entourant le coeur monomode. Une telle solution est en particulier décrite dans la demande de brevet internationale WO 98/25326.

Une telle solution permet d'obtenir une interaction plus fréquente entre les rayons lumineux du faisceau de pompage et le milieu amplificateur de l'anneau dopé. Néanmoins, cette solution reste limitée par la surface maximale que peut atteindre l'anneau dopé. Il est évident que plus l'anneau dopé occupe une surface large, plus l'amplification sera importante. Or, l'épaisseur de l'anneau dopé est nécessairement limitée par la nécessité de maintenir un coeur central monomode. En effet, il a précédemment été mentionné que le coeur central monomode a un indice de réfraction plus élevé que celui du coeur multimode, lui-même plus élevé que celui de la gaine optique de la fibre. Ces différences d'indices sont indispensables pour maintenir les fonctions de guides d'onde des coeurs concentriques.

Or, le dopage de l'anneau, de par sa réalisation, entraîne généralement une augmentation d'indice du milieu dopé. Il est en effet courant d'ajouter au dopant de terre rare amplificateur un codopant élargissant le gain tel que de l'aluminium et/ou un codopant facilitant l'incorporation de la terre rare tel que le phosphore par exemple, qui sont des éléments faisant augmenter l'indice de réfraction du milieu dans lequel ils sont insérés. Ainsi, un anneau dopé de grande épaisseur, en particulier dont l'épaisseur atteindrait celle du rayon du coeur monomode, provoquerait la perte de guidage de la structure monomode du coeur central. Généralement, la surface de l'anneau dopé est limitée à environ la moitié de la surface du coeur monomode.

L'objectif de la présente invention est de répondre aux problèmes cités de l'art antérieur et plus spécifiquement au problème de l'efficacité du pompage due à la limite imposée à l'épaisseur de l'anneau de par la nécessitée de maintenir un signal guidé monomode.

A cet effet, l'invention propose de faire correspondre l'indice de réfraction de l'anneau dopé avec l'indice de réfraction du coeur multimode. Il devient ainsi possible d'élargir la surface de l'anneau dopé et par conséquent d'améliorer l'efficacité du pompage et donc de l'amplification du signal transmis.

Plus particulièrement, l'invention a pour objet une fibre optique amplificatrice comprenant un coeur monomode d'indice de réfraction n₁, un coeur multimode d'indice de réfraction n₂ et une gaine optique d'indice de réfraction n₃, ledit coeur multimode comprenant un anneau dopé de terre rare entourant le coeur monomode, caractérisée en ce que l'anneau dopé de terre rare a un indice de réfraction n₄ sensiblement égal à l'indice de réfraction n₂ du coeur multimode.

Selon une caractéristique, la différence des indices de réfraction n₂ et n₄ respectivement du coeur multimode et de l'anneau dopé est inférieure ou égale à 2.5 10⁻³.

Selon une autre caractéristique, la surface de l'anneau dopé de terre rare est comprise entre une surface sensiblement égale à la surface du coeur monomode et une surface trois fois supérieure à la surface du coeur monomode, telle qu'une surface comprise entre 50 et 150 µm².

Selon les modes de réalisation, l'anneau dopé de terre rare est adjacent ou partiellement inclus au coeur monomode.

Selon une variante de réalisation, l'interface entre le coeur multimode et la gaine optique présente, en section transversale, une forme sensiblement polygonale.

Selon un premier mode de réalisation, l'anneau dopé de terre rare est codopé avec un élément abaissant son indice de réfraction n₄ de manière à égaler sensiblement l'indice de réfraction n₂ du coeur multimode, tel que du fluor (F) ou du bore (B).

Selon un deuxième mode de réalisation, le coeur multimode est dopé avec un élément augmentant son indice de réfraction n₂ de manière à égaler sensiblement l'indice de réfraction n₄ de l'anneau dopé de terre rare tel que du germanium (Ge) ou du phosphore (P).

Selon les applications, le coeur monomode est non dopé de terre rare ou partiellement dopé de terre rare.

Selon un mode de réalisation, le profil d'indice de réfraction n₁ du coeur monomode est une fonction de son rayon, tel qu'une fonction définissant un profil constitué d'au moins deux zones distinctes, dont une zone dite centrale et une zone dite, ladite zone centrale présentant un indice de réfraction plus faible que l'indice de ladite zone d'indice de réfraction le plus élevé.

Selon les applications, la fibre optique amplificatrice selon l'invention constitue un amplificateur optique ou un laser.

Les particularités et avantages de la présente invention apparaîtront plus clairement à la lecture de la description qui suit, donnée à titre d'exemple illustratif et non limitatif, et faite en référence aux figures annexées dans lesquelles :
- la figure 1 illustre schématiquement par une vue en coupe transversale d'une fibre optique amplificatrice selon l'invention ;
- la figure 2 est un graphe du profil d'indice de la fibre optique amplificatrice selon l'invention ;
- la figure 3 illustre une variante de réalisation de la fibre optique amplificatrice selon l'invention ;
- la figure 4 est un graphe du profil d'indice d'une variante de réalisation de la fibre optique amplificatrice selon l'invention ;

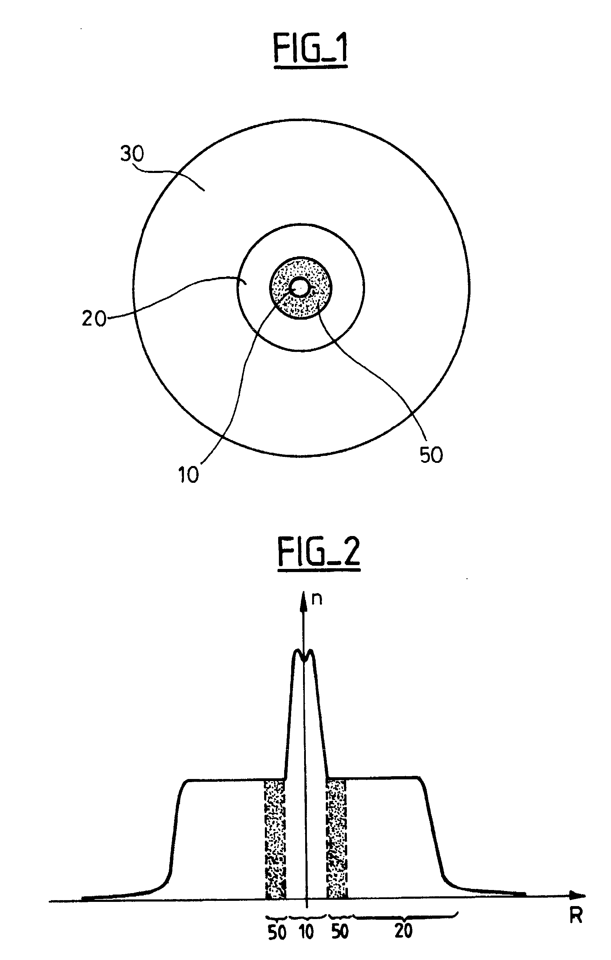

En référence à la figure 1, la fibre optique amplificatrice selon l'invention comprend un coeur monomode 10 d'indice de réfraction n₁, un coeur multimode 20 d'indice de réfraction n₂ et une gaine optique 30 d'indice de réfraction n₃ avec n₁>n₂>n₃.

Tel que cela a déjà été exposé, la zone dopée de la fibre selon l'invention est constituée d'un anneau 50 dopé de terre rare, préférentiellement inclus dans le coeur multimode 20 et entourant le coeur monomode 10. L'emplacement de l'anneau 50 dans le coeur multimode 20 par rapport à l'axe central de la fibre est à optimiser selon les applications. Par exemple, l'anneau dopé de terre rare peut être adjacent au coeur monomode ou bien partiellement inclus dans le coeur monomode.

En particulier, le coeur monomode peut être non dopé de terre rare, c'est à dire constitué d'un milieu non amplificateur, ou au moins partiellement dopé de terre rare. Le dopage du coeur monomode 10, défini par les éléments dopants utilisés ainsi que par leur concentration, peut être identique ou différent du dopage de l'anneau 50.

Selon une caractéristique essentielle de l'invention, l'anneau 50 dopé de terre rare a un indice de réfraction n₄ sensiblement égal à l'indice de réfraction n₃ du coeur multimode. Pratiquement, il est souhaitable que la différence des indices de réfractions n₂ et n₄ respectivement du coeur multimode 20 et de l'anneau 50 dopé soit inférieure ou égale à 2.5 10⁻³.

Ainsi, comme illustré sur le graphe de la figure 2, la variation d'indice due à la présence de l'anneau dopé est minime et le guidage du coeur monomode reste parfaitement bien assuré. La présence de l'anneau dopé 50 dans le coeur multimode est transparente sur le profil d'indice de réfraction de la fibre.

L'efficacité de la pompe est directement reliée à la surface de la zone dopée donc à la taille de l'anneau. Préférentiellement, la surface de l'anneau dopé est sensiblement égale à celle du coeur monomode, voire supérieure jusqu'à trois fois. Par exemple la surface de l'anneau dopé peut être comprise entre 50 et 120 µm².

Ainsi, la fibre optique amplificatrice selon l'invention permet avantageusement d'atteindre des efficacités de pompage de l'ordre de 30%, contre environ 12% classiquement obtenue avec un anneau dopé d'épaisseur limitée.

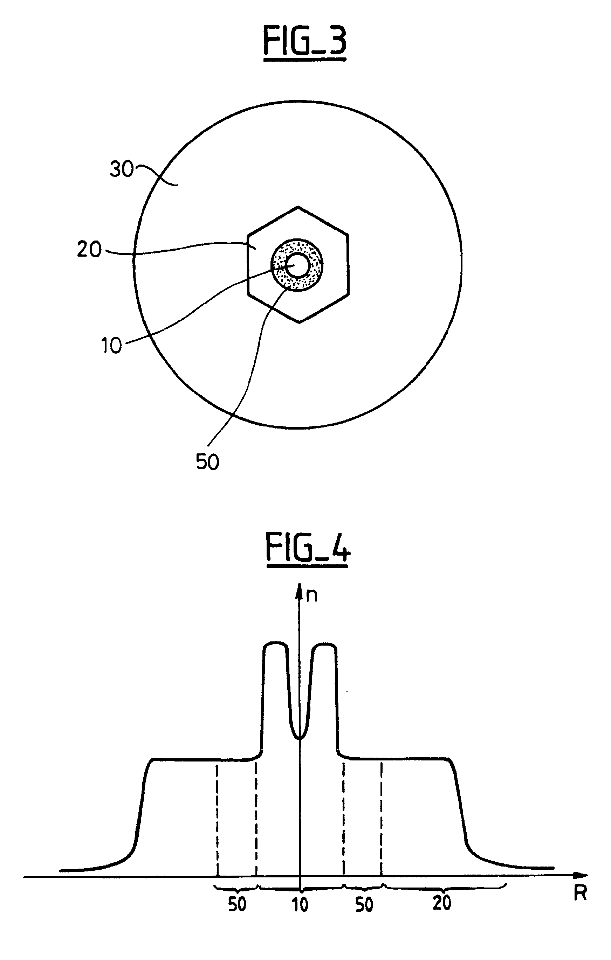

Selon une variante de réalisation avantageuse, illustrée sur la figure 3, la périphérie du coeur multimode 20 peut être réalisée de forme inhomogène afin de provoquer des réflexions aléatoires qui entraînent des changements de trajectoires des rayons lumineux et forcent le passage de ces rayons de pompage à travers la zone dopée amplificatrice. Par exemple, l'interface entre le coeur multimode 20 et la gaine optique 30 peut présenter, en section transversale, une forme sensiblement polygonale.

Deux principaux modes de réalisation peuvent être envisagés pour obtenir que l'indice de réfraction n₄ l'anneau 50 dopé amplificateur soit sensiblement égal à l'indice de réfraction n₂ du coeur multimode.

Selon un premier mode de réalisation, l'anneau 50 qui est dopé de terre rare, avec de l'Erbium (Er) et/ou de l'Ytterbium (Yb) par exemple, et codopé avec un élément élargissant le gain tel que de l'aluminium (Al) par exemple, est également codopé avec un élément supplémentaire abaissant son indice de réfraction n₄ de manière à égaler sensiblement l'indice de réfraction n₂ du coeur multimode 20, par exemple avec de du fluor (F) ou avec du bore (B).

Selon un deuxième mode de réalisation, c'est le coeur multimode 20 qui est dopé avec un élément augmentant son indice de réfraction n₂ de manière à égaler sensiblement l'indice de réfraction n₄ de l'anneau 50 dopé de terre rare et d'aluminium, par exemple avec du germanium (Ge) ou du phosphore (P).

L'utilisation d'un anneau 50 dopé comme zone amplificatrice de pompage permet avantageusement de ne pas fixer le dopage du coeur monomode en fonction des contraintes d'amplification du signal. Ainsi, il devient possible de modifier le profil d'indice de réfraction n₁ du coeur monomode en fonction du rayon R. Une telle modification du profil d'indice du coeur monomode a essentiellement pour objectif de modifier la distribution modale de la puissance de pompage afin de concentrer au maximum cette puissance dans la zone dopée amplificatrice, c'est à dire dans l'anneau 50. Le profile d'indice de réfraction n₁ du coeur monomode présente une structure multizones (par exemple de type coaxial dans le cas où le nombre de zones serait égal à 2).

Par exemple, comme illustré sur le graphe de la figure 4, le profil d'indice de réfraction n₁ du coeur monomode peut être une fonction définissant un profil de type « coaxial » définit par deux zones : une zone périphérique et une zone centrale d'indice de réfraction plus faible que la zone périphérique. Le profil assure un guidage monomode tout en permettant une plus grande interaction entre les modes de pompe et la zone dopée.

## Revendications

1. Fibre optique amplificatrice comprenant un coeur monomode d'indice de réfraction n₁, un coeur multimode d'indice de réfraction n₂ et une gaine optique d'indice de réfraction n₃, ledit coeur multimode comprenant un anneau dopé de terre rare entourant le coeur monomode, **caractérisée en ce que** l'anneau dopé de terre rare a un indice de réfraction n₄ sensiblement égal à l'indice de réfraction n₂ du coeur multimode, la surface de l'anneau dopé de terre rare étant comprise entre une surface sensiblement égale à la surface du coeur monomode et une surface trois fois supérieure à la surface du coeur monomode.

2. Fibre optique amplificatrice selon la revendication 1, **caractérisée en ce que** la différence des indices de réfraction n₂ et n₄ respectivement du coeur multimode et de l'anneau dopé est inférieure ou égale à 2.5 10⁻³.

3. Fibre optique amplificatrice selon l'une des quelconques revendications précédentes, **caractérisée en ce que** la surface de l'anneau dopé de terre rare est comprise entre 50 et 150 µm².

4. Fibre optique amplificatrice selon l'une des quelconques revendications 1 à 3, **caractérisée en ce que** l'anneau dopé de terre rare est adjacent au coeur monomode.

5. Fibre optique amplificatrice selon l'une des quelconques revendications 1 à 3, **caractérisée en ce que** l'anneau dopé de terre rare est partiellement inclus sans le coeur monomode.

6. Fibre optique amplificatrice selon l'une des quelconques revendications précédentes, **caractérisée en ce que** l'interface entre le coeur multimode et la gaine optique présente, en section transversale, une forme sensiblement polygonale.

7. Fibre optique amplificatrice selon l'une des quelconques revendications 1 à 6, **caractérisée en ce que** l'anneau dopé de terre rare est codopé avec un élément abaissant son indice de réfraction n₄ de manière à égaler sensiblement l'indice de réfraction n₂ du coeur multimode.

8. Fibre optique amplificatrice selon la revendication 7, **caractérisée en ce que** l'élément codopant de l'anneau est du fluor(F).

9. Fibre optique amplificatrice selon la revendication 7, **caractérisée en ce que** l'élément codopant de l'anneau est du bore (B).

10. Fibre optique amplificatrice selon l'une des quelconques revendications 1 à 9, **caractérisée en ce que** le coeur multimode est dopé avec un élément augmentant son indice de réfraction n₂ de manière à égaler sensiblement l'indice de réfraction n₄ de l'anneau dopé de terre rare.

11. Fibre optique amplificatrice selon la revendication 10, **caractérisée en ce que** l'élément dopant du coeur multimode est du germanium (Ge).

12. Fibre optique amplificatrice selon la revendication 10, **caractérisée en ce que** l'élément dopant du coeur multimode est du phosphore (P).

13. Fibre optique amplificatrice selon l'une des quelconques revendications 1 à 12, **caractérisée en ce que** le coeur monomode est non dopé de terre rare.

14. Fibre optique amplificatrice selon l'une des quelconques revendications 1 à 12, **caractérisée en ce que** le coeur monomode est au moins partiellement dopé de terre rare.

15. Fibre optique amplificatrice selon l'une quelconque des revendications précédentes, **caractérisée en ce que** le profile d'indice de réfraction n₁ du coeur monomode est une fonction de son rayon.

16. Fibre optique amplificatrice selon la revendication 15, **caractérisée en ce que** la fonction du profil d'indice de réfraction n₁ du coeur monomode est constituée d'au moins deux zones distinctes, dont une zone dite centrale et une zone dite, ladite zone centrale présentant un indice de réfraction plus faible que l'indice de ladite zone d'indice de réfraction le plus élevé.

17. Fibre optique amplificatrice selon l'une des quelconques revendications 1 à 16 **caractérisée en ce qu'**elle constitue un amplificateur optique.

18. Fibre optique amplificatrice selon l'une des quelconques revendications 1 à 16, **caractérisée en ce qu'**elle constitue un laser.
